(19) Europäisches Patentamt
European Patent Office
Office européen des brevets

(11) **EP 4 624 127 A1**

(12) **EUROPEAN PATENT APPLICATION**
published in accordance with Art. 153(4) EPC

(43) Date of publication:
**01.10.2025 Bulletin 2025/40**

(21) Application number: **23894984.6**

(22) Date of filing: **21.11.2023**

(51) International Patent Classification (IPC):
***B29B 9/12*** (2006.01)   ***B29B 11/10*** (2006.01)
***C08L 67/02*** (2006.01)

(52) Cooperative Patent Classification (CPC):
**B29B 9/12; B29B 11/10; C08L 67/02**

(86) International application number:
**PCT/KR2023/018737**

(87) International publication number:
**WO 2024/112056 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.11.2022 KR 20220158228**

(71) Applicant: **CJ CheilJedang Corporation
Seoul 04560 (KR)**

(72) Inventors:
• **NOH, Sora
Seoul 04560 (KR)**
• **KIM, Jieun
Seoul 04560 (KR)**
• **KIM, Jeongsu
Seoul 04560 (KR)**
• **KU, Sookhee
Seoul 04560 (KR)**
• **YOON, Ki Chull
Seoul 04560 (KR)**

(74) Representative: **Meissner Bolte Partnerschaft
mbB
Patentanwälte Rechtsanwälte
Postfach 86 06 24
81633 München (DE)**

(54) **METHOD FOR PRODUCING PELLETS COMPRISING POLYHYDROXYALKANOATE, AND PELLETS PRODUCED THEREBY**

(57) The present invention relates to a method for producing pellets comprising a polyhydroxyalkanoate, and pellets produced thereby, the method comprising: (1) a step for injecting a raw material including a polyhydroxyalkanoate (PHA) and an additive into a twin-screw extruder to form a polyhydroxyalkanoate melt; (2) a step for supplying the polyhydroxyalkanoate melt to a die plate through a gear pump; (3) a step for passing the polyhydroxyalkanoate melt through the die plate to form a polyhydroxyalkanoate melt strand; and (4) a step for cutting and crystallizing the polyhydroxyalkanoate melt strand in an underwater pellet producer to form pellets.

[Fig. 1]

EP 4 624 127 A1

## Description

### Technical Field

The present disclosure relates to a process for preparing pellets comprising a polyhydroxyalkanoate with a controlled molecular weight and to an apparatus for preparing the pellets.

### Background Art

In general, synthetic resins are widely used in the manufacture of various products by virtue of their excellent physical properties, low price, and lightweight characteristics. However, synthetic resins have a major problem in that they do not decompose well; as a result, they are a major cause of environmental pollution. Accordingly, in recent years, biodegradable resins derived from plants that are environmentally friendly and reproducible have been attracting attention.

Polyhydroxyalkanoate, one of the above biodegradable resins, has physical properties similar to those of general-purpose synthetic resins such as polyethylene or polypropylene, while it has the advantage of being able to be naturally decomposed by microorganisms in soil or the ocean; thus, attempts are being made to manufacture various products using it.

An example of a process for manufacturing a product from the polyhydroxyalkanoate is a procedure of producing a polyhydroxyalkanoate, pelletizing it, and then molding it. Specifically, a polyhydroxyalkanoate is produced by culturing microorganisms, and the microorganisms are crushed, followed by purification using an organic solvent and/or water, to recover the polyhydroxyalkanoate as a resin component. Subsequently, the recovered polyhydroxyalkanoate may be extruded through an extruder or the like, pelletized through a cutting process or the like, and then molded to manufacture a product.

However, since crystalline or semi-crystalline polyhydroxyalkanoates are sensitive to heat, when stressed by high temperatures and high-speed rotational friction of the screw during the extrusion process, there is a problem in that the molecular weight of the pelletized polyhydroxyalkanoate rapidly decreases. This decrease in molecular weight deteriorates mechanical properties such as elongation and impact strength, which limits the ability to secure the physical properties of a final product.

[Prior Art Document]

[Patent Document]

(Patent Document 1) Korean Patent No. 10-1485386

### Disclosure of Invention

### Technical Problem

In order to solve the above conventional problems, an object of the present disclosure is to provide a process for preparing pellets capable of controlling the decrease in molecular weight of a polyhydroxyalkanoate during the process for preparing pellets from a raw material comprising the polyhydroxyalkanoate.

In addition, another object of the present disclosure is to provide pellets prepared by the above preparation process.

In addition, another object of the present disclosure is to provide an apparatus for preparing pellets capable of preparing the pellets while controlling the decrease in the molecular weight of a polyhydroxyalkanoate.

### Solution to Problem

In order to accomplish the above object, the present disclosure provides a process for preparing pellets, which comprises (1) feeding a raw material comprising a polyhydroxyalkanoate (PHA) and an additive to a twin-screw extruder to form a polyhydroxyalkanoate melt; (2) supplying the polyhydroxyalkanoate melt to a die plate through a gear pump; (3) passing the polyhydroxyalkanoate melt through the die plate to form a polyhydroxyalkanoate melt strand; and (4) cutting and crystallizing the polyhydroxyalkanoate melt strand in an underwater pellet cutter to form pellets.

According to an embodiment of the present disclosure, in step (1), the barrel temperature of the twin-screw extruder may be 120 to 160°C.

According to another embodiment of the present disclosure, in step (1), the temperature of the polyhydroxyalkanoate melt may be 130 to 160°C.

According to another embodiment of the present disclosure, in step (1), the additive may comprise at least one of a slip agent and a nucleating agent.

According to another embodiment of the present disclosure, the amount of the additive may be 0.1 to 20 parts by weight relative to 100 parts by weight of the polyhydroxyalkanoate.

According to another embodiment of the present disclosure, in step (1), the polyhydroxyalkanoate may be a crystalline polyhydroxyalkanoate, a semi-crystalline polyhydroxyalkanoate, or an amorphous polyhydroxyalkanoate.

According to another embodiment of the present disclosure, in step (1), the polyhydroxyalkanoate may be a copolymer comprising a repeat unit derived from at least one selected from the group consisting of 3-hydroxybutyrate (3-HB), 3-hydroxypropionate (3-HP), 3-hydroxyvalerate (3-HV), 3-hydroxyhexanoate (3-HH), 4-hydroxybutyrate (4-HB), 4-hydroxyvalerate (4-HV), 4-hydroxyhexanoate (4-HH), 5-hydroxyvalerate (5-HV), and 6-hydroxyhexanoate (6-HH).

According to another embodiment of the present disclosure, the polyhydroxyalkanoate may be a copolymer comprising a repeat unit derived from 4-hydroxybutyrate (4-HB) in an amount of 1 to 60% by weight based on the total weight of the copolymer.

According to another embodiment of the present disclosure, the polyhydroxyalkanoate may be a poly(3-hydroxybutyrate-co-4-hydroxybutyrate).

According to another embodiment of the present disclosure, in step (2), the pressure difference of the gear pump before and after the passage of the polyhydroxyalkanoate melt may be 60 to 180 bar.

According to another embodiment of the present disclosure, in step (3), the temperature of the die plate may be 120 to 190°C.

According to another embodiment of the present disclosure, in step (4), the temperature of a circulating water bath equipped in the underwater pellet cutter may be 40 to 80°C.

According to another embodiment of the present disclosure, the process for preparing pellets may further comprise (5) dewatering and drying the pellets formed in step (4).

According to another embodiment of the present disclosure, the rate of decrease in the molecular weight ($M_d$) of the polyhydroxyalkanoate according to the following Equation 1 may be 15% or less.

$$[\text{Equation 1}]$$

$$M_d = \{(M_1 - M_2) / M_1\} \times 100$$

In Equation 1, $M_1$ is the weight average molecular weight of the polyhydroxyalkanoate contained in the raw material, and $M_2$ is the weight average molecular weight of the polyhydroxyalkanoate contained in the pellets.

Meanwhile, in order to accomplish the above object, the present disclosure provides pellets prepared by the above preparation process.

In addition, in order to accomplish the above object, the present disclosure provides an apparatus for preparing pellets, which comprises a twin-screw extruder to form a polyhydroxyalkanoate melt from a raw material comprising a polyhydroxyalkanoate (PHA) and an additive; a gear pump provided at the rear end of the twin-screw extruder to transport the polyhydroxyalkanoate melt; a die plate for forming a polyhydroxyalkanoate melt strand from the polyhydroxyalkanoate melt transported through the gear pump; and an underwater pellet cutter to cut and crystallize the polyhydroxyalkanoate melt strand formed through the die plate to form pellets.

**Advantageous Effects of Invention**

In the present disclosure, a raw material comprising a polyhydroxyalkanoate is processed in a twin-screw extruder in a low-temperature and low-pressure environment to obtain a polyhydroxyalkanoate melt, which is then transported by a gear pump. Thus, the conventional problem of a rapid decrease in the molecular weight of a polyhydroxyalkanoate during the pelletizing procedure due to stress caused by the high-temperature and high-pressure environment of a twin-screw extruder can be solved. In addition, in the present disclosure, as an additive is added to the twin-screw extruder during the pelletizing procedure, it is possible to control the decrease in the molecular weight of a polyhydroxyalkanoate.

Accordingly, the present disclosure can provide pellets comprising a polyhydroxyalkanoate with a minimized decrease in molecular weight. When various articles are manufactured using the pellets, articles (e.g., films, straws, containers, trays, cups, and the like) having excellent physical properties (mechanical properties) can be obtained.

**Brief Description of Drawings**

Fig. 1 is a flowchart showing a process for preparing pellets according to an embodiment of the present disclosure.
Fig. 2 is a schematic diagram showing an apparatus for preparing pellets according to an embodiment of the present disclosure.

## Best Mode for Carrying out the Invention

Hereinafter, the present disclosure will be described in detail. The present disclosure is not limited to those given below, but it may be modified into various forms as long as the gist of the disclosure is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

For the sake of description, the sizes of individual elements in the appended drawings may be exaggeratedly depicted, and they may differ from the actual sizes.

The present disclosure is characterized by minimizing the exposure of a raw material comprising a polyhydroxyalkanoate (PHA) to a high-temperature and high-pressure environment during the pelletization process, thereby controlling the decrease in molecular weight (weight average molecular weight or number average molecular weight) of the polyhydroxyalkanoate. The present disclosure will be described in detail as follows.

## Process for preparing pellets

The process for preparing pellets according to the present disclosure comprises (1) feeding a raw material comprising a polyhydroxyalkanoate (PHA) and an additive to a twin-screw extruder to form a polyhydroxyalkanoate melt; (2) supplying the polyhydroxyalkanoate melt to a die plate through a gear pump; (3) passing the polyhydroxyalkanoate melt through the die plate to form a polyhydroxyalkanoate melt strand; and (4) cutting and crystallizing the polyhydroxyalkanoate melt strand in an underwater pellet cutter to form pellets.

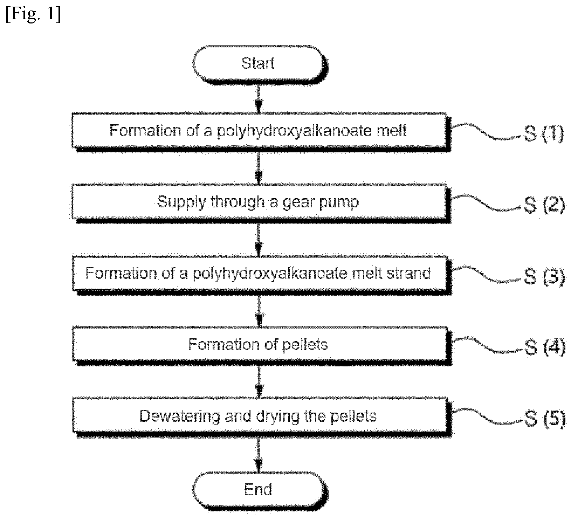

Hereinafter, each step will be described with reference to Fig. 1.

## Step (1): Formation of a polyhydroxyalkanoate melt

According to the present disclosure, step (1) is a step of feeding a raw material comprising a polyhydroxyalkanoate (PHA) and an additive to a twin-screw extruder to form a polyhydroxyalkanoate melt.

The polyhydroxyalkanoate contained in the raw material has physical properties similar to those of synthetic biodegradable polymers derived from petroleum, such as polybutylene adipate terephthalate (PBAT), polybutylene succinate (PBS), polybutylene succinate terephthalate (PBST), and polybutylene succinate adipate (PBSA), and has excellent characteristics in terms of biodegradability and biocompatibility.

The polyhydroxyalkanoate may be obtained by cell disruption using a mechanical method or a physical method, or it may be obtained by cell disruption using a non-mechanical method or a chemical method.

Specifically, the polyhydroxyalkanoate may be a copolymer comprising a repeat unit derived from at least one (at least one monomer) selected from the group consisting of 3-hydroxybutyrate (3-HB), 3-hydroxypropionate (3-HP), 3-hydroxyvalerate (3-HV), 3-hydroxyhexanoate (3-HH), 4-hydroxybutyrate (4-HB), 4-hydroxyvalerate (4-HV), 4-hydroxyhexanoate (4-HH), 5-hydroxyvalerate (5-HV), and 6-hydroxyhexanoate (6-HH), but it is not limited thereto.

The polyhydroxyalkanoate may be a crystalline polyhydroxyalkanoate (cPHA), a semi-crystalline polyhydroxyalkanoate (scPHA), or an amorphous polyhydroxyalkanoate (aPHA) depending on the types of monomers and the contents of repeat units derived therefrom. Specifically, the polyhydroxyalkanoate may be classified into cPHA, scPHA, or aPHA as its crystallinity is controlled depending on the content of a repeat unit derived from 4-hydroxybutyrate (4-HB).

The polyhydroxyalkanoate may be a copolymer comprising a repeat unit derived from the 4-hydroxybutyrate (4-HB) in an amount of 1 to 60% by weight, 1 to 55% by weight, 1 to 50% by weight, 1 to 45% by weight, 1 to 40% by weight, 1 to 35% by weight, 1 to 30% by weight, 1 to 25% by weight, 2 to 23% by weight, 3 to 20% by weight, 4 to 15% by weight, 5 to 15% by weight, 6 to 14% by weight, or 7 to 13% by weight, based on the total weight of the copolymer (polyhydroxyalkanoate), but it is not limited thereto.

For example, the polyhydroxyalkanoate may be poly(3-hydroxybutyrate-co-4-hydroxybutyrate). In such an event, the content of a 4-HB repeat unit contained in the poly(3-hydroxybutyrate-co-4-hydroxybutyrate) may be 1 to 60% by weight, 1 to 55% by weight, 1 to 50% by weight, 1 to 45% by weight, 1 to 40% by weight, 1 to 35% by weight, 1 to 30% by weight, 1 to 25% by weight, 2 to 23% by weight, 3 to 20% by weight, 4 to 15% by weight, 5 to 15% by weight, 6 to 14% by weight, or 7 to 13% by weight, based on the total weight of the poly(3-hydroxybutyrate-co-4-hydroxybutyrate), but it is not limited thereto.

When the polyhydroxyalkanoate is an scPHA, the crystallization temperature (Tc) may be 50 to 120°C, 55 to 115°C, 65 to 105°C, or 75 to 95°C, but it is not limited thereto. In addition, when the polyhydroxyalkanoate is an scPHA, the melting temperature (Tm) may be 110 to 170°C, 115 to 160°C, or 120 to 150°C, but it is not limited thereto.

The polyhydroxyalkanoate may have a weight average molecular weight (Mw) of 100,000 to 800,000 g/mole, 150,000 to 750,000 g/mole, 200,000 to 700,000 g/mole, or 250,000 to 650,000 g/mole, but it is not limited thereto.

The polyhydroxyalkanoate may have a polydispersity index (PDI) of 1.0 or more, 1.2 or more, 1.5 or more, 1.8 or more, 1.9 or more, or 2.0 or more, and 5.0 or less, 4.0 or less, 3.0 or less, 2.9 or less, 2.8 or less, 2.7 or less, 2.6 or less, or 2.5 or less, but it is not limited thereto.

The raw material comprising the polyhydroxyalkanoate may further comprise, in addition to the polyhydroxyalkanoate, a commonly known synthetic resin (e.g., polyethylene (PE), polypropylene (PP), or a mixture thereof) and/or a biodegradable resin (e.g., polylactic acid (PLA), polyvinyl alcohol (PVOH), ethylene vinyl alcohol (EVOH), polybutylene adipate-co-terephthalate (PBAT), polybutylene succinate (PBS), polycaprolactone (PCL), or a mixture thereof) as needed.

Meanwhile, in the present disclosure, even if the polyhydroxyalkanoate is a cPHA or an scPHA, which is sensitive to heat, the twin-screw extruder in which the raw material comprising the cPHA or the scPHA is processed is controlled to operate at relatively low temperatures and low pressures; thus, the molecular weight of the cPHA or the scPHA can be prevented from rapidly decreasing due to exposure to a high-temperature and high-pressure environment.

Specifically, when the twin-screw extruder is operated, the barrel temperature may be 120 to 160°C, more specifically, 120 to 158°C, 120 to 155°C, 123 to 155°C, 125 to 153°C, or 125 to 150°C, but it is not limited thereto. In addition, when the twin-screw extruder is operated, the screw rotation speed may be 60 to 150 rpm, specifically, 65 to 145 rpm, 70 to 140 rpm, 75 to 130 rpm, or 80 to 120 rpm, but it is not limited thereto. As the barrel temperature and screw rotation speed of the twin-screw extruder are each within the above ranges, a polyhydroxyalkanoate melt can be smoothly formed while minimizing the decrease in the molecular weight of the polyhydroxyalkanoate.

The additive contained in the raw material has the characteristic of increasing the fluidity of the polyhydroxyalkanoate melt. The additive comprises at least one of a slip agent and a nucleating agent. As at least one of the slip agent and the nucleating agent is introduced into the twin-screw extruder, the crystallinity of the polyhydroxyalkanoate is controlled, thereby increasing the fluidity (flowability) of the polyhydroxyalkanoate melt; thus, the polyhydroxyalkanoate melt can be smoothly discharged from the twin-screw extruder.

Specifically, the slip agent may play a role in allowing the polyhydroxyalkanoate melt to be smoothly discharged from the twin-screw extruder. In addition, the slip agent may also play a role in preventing the polyhydroxyalkanoate melt from sticking to the die plate or the cut polyhydroxyalkanoate pellets from sticking to each other during the cutting process for forming pellets.

The slip agent is not particularly limited as long as it is a commonly known slip agent that can be applied to a polymer resin. Specifically, it may be at least one selected from the group consisting of amide-based substances, metallic fatty acids, and wax-based substances.

The amide-based substance is not particularly limited. Specifically, it may comprise at least one selected from the group consisting of ethylenebis(stearamide), oleamide, erucamide, and stearamide.

The metallic fatty acid is not particularly limited. Specifically, it may comprise at least one selected from the group consisting of calcium stearate, zinc stearate, magnesium stearate, aluminum stearate, potassium oleate, zinc oleate, magnesium oleate, aluminum oleate, calcium palmitate, zinc palmitate, magnesium palmitate, and aluminum palmitate.

The wax-based substance is not particularly limited. Specifically, it may comprise at least one selected from the group consisting of bees wax, carnauba wax, and candelilla wax.

The nucleating agent may affect the crystallinity of a polyhydroxyalkanoate during the procedure in which a raw material comprising the polyhydroxyalkanoate is converted into a melt, thereby improving the cooling and cutting procedures of the polyhydroxyalkanoate melt for forming pellets.

The nucleating agent is not particularly limited as long as it is a commonly known nucleating agent that can be applied to a polymer resin. Specifically, it may comprise at least one selected from the group consisting of calcium carbonate, silica, talc, boron nitride, and sorbitol derivatives.

Meanwhile, the additive may further comprise other commonly known additives that can be applied to polymer resins (biodegradable resins) in addition to the slip agent and the nucleating agent.

The additive may be mixed in advance with the polyhydroxyalkanoate and then fed to the twin-screw extruder or may be fed to the twin-screw extruder separately from the polyhydroxyalkanoate through a separate feeder.

The amount of the additive added may be 0.1 to 20 parts by weight, specifically, 0.1 to 15 parts by weight, 0.2 to 13 parts by weight, 0.2 to 10 parts by weight, 0.3 to 8 parts by weight, or 0.5 to 5 parts by weight, relative to 100 parts by weight of the polyhydroxyalkanoate contained in the raw material, but it is not limited thereto. As the amount of the additive added is within the above range, the fluidity and cooling/cutting process efficiency of the polyhydroxyalkanoate melt can be significantly enhanced while minimizing the decrease in the molecular weight of the polyhydroxyalkanoate. For example, the amount of the slip agent added may be 0.1 to 10 parts by weight, specifically, 0.2 to 8 parts by weight, 0.3 to 7 parts by weight, 0.4 to 6 parts by weight, 0.5 to 5 parts by weight, or 0.8 to 3 parts by weight, relative to 100 parts by weight of the polyhydroxyalkanoate contained in the raw material, but it is not limited thereto. In addition, the amount of the nucleating agent added may be 0.1 to 10 parts by weight, specifically, 0.2 to 8 parts by weight, 0.3 to 7 parts by weight, 0.4 to 6 parts by weight, 0.5 to 5 parts by weight, or 0.8 to 3 parts by weight, relative to 100 parts by weight of the polyhydroxyalkanoate contained **in** the raw material, but it is not limited thereto.

The temperature of the polyhydroxyalkanoate melt formed through step (1) may be specifically 130 to 160°C, more specifically, 130 to 158°C, 133 to 155°C, 133 to 153°C, or 135 to 150°C, but it is not limited thereto. As the temperature of the polyhydroxyalkanoate melt is within the above range, the polyhydroxyalkanoate melt can maintain a stable molten state while preventing thermal decomposition of the polyhydroxyalkanoate.

Step (2): Supply through a gear pump

According to the present disclosure, step (2) is a step of supplying the polyhydroxyalkanoate melt to a die plate through a gear pump. The fluidity (flowability) of the polyhydroxyalkanoate melt can be secured through step (2), thereby increasing the efficiency of preparing pellets. That is, if the twin-screw extruder is operated at relatively low temperatures and low pressures to control the decrease in the molecular weight of the polyhydroxyalkanoate in step (1), the polyhydroxyalkanoate melt formed thereby may have high viscosity and thus poor fluidity. In the present disclosure, the polyhydroxyalkanoate melt is transported through a gear pump, thereby securing the fluidity of the polyhydroxyalkanoate melt and increasing the overall efficiency of preparing pellets.

The operating conditions of the gear pump for supplying the polyhydroxyalkanoate melt to the die plate may not be particularly limited. However, the difference in pressure in the gear pump before and after the polyhydroxyalkanoate melt passes through the gear pump may be 60 to 180 bar. In such an event, the pressure of the gear pump may be higher after the polyhydroxyalkanoate melt passes through it than before it passes through it. Specifically, the difference $(P_2 - P_1)$ between the gear pump pressure $(P_1)$ before the polyhydroxyalkanoate melt passes through the gear pump and the gear pump pressure $(P_2)$ after it passes through the gear pump may be 60 to 180 bar, 60 to 175 bar, 60 to 170 bar, 65 to 165 bar, 70 to 160 bar, 75 to 150 bar, or 80 to 140 bar, but it is not limited thereto. As the difference $(P_2 - P_1)$ in the gear pump is within the above range, the polyhydroxyalkanoate melt can be smoothly supplied to the die plate while the decrease in the molecular weight of the polyhydroxyalkanoate is controlled.

Meanwhile, the flow rate of the polyhydroxyalkanoate melt supplied through the gear pump (the flow rate of the polyhydroxyalkanoate melt supplied to the die plate) is not particularly limited and may be appropriately adjusted according to the scale of the twin-screw extruder.

Step (3): Formation of a polyhydroxyalkanoate melt strand

According to the present disclosure, step (3) is a step of passing the polyhydroxyalkanoate melt, which has been supplied to the die pump by the gear pump, through the die plate to form a polyhydroxyalkanoate melt strand.

The temperature of the die plate for forming a polyhydroxyalkanoate melt strand is not particularly limited, but it may specifically be 120 to 190°C. More specifically, the temperature of the die plate may be 123 to 188°C, 125 to 185°C, 128 to 185°C, 130 to 185°C, 133 to 182°C, 135 to 180°C, 138 to 178°C, or 140 to 175°C. As the temperature of the die plate is within the above range, a polyhydroxyalkanoate melt strand can be smoothly formed while the decrease in the molecular weight of the polyhydroxyalkanoate is controlled.

Step (4): Formation of pellets

According to the present disclosure, step (4) is a step of cutting and crystallizing the polyhydroxyalkanoate melt strand in an underwater pellet cutter (underwater cutter) to form pellets. Specifically, when the polyhydroxyalkanoate melt strand is supplied to the underwater pellet cutter, it is cut into a predetermined size to form polyhydroxyalkanoate pieces, which are then passed through a circulating water bath equipped in the underwater pellet cutter to undergo a crystallization process to form pellets.

The temperature of the circulating water bath equipped in the underwater pellet cutter is not particularly limited, but it may specifically be 40 to 80°C. More specifically, the temperature of the circulating water bath may be 43 to 80°C, 45 to 80°C, 48 to 78°C, 50 to 75°C, 53 to 73°C, or 55 to 70°C, but it is not limited thereto. As the temperature of the circulating water bath is within the above range, the cooling and crystallization of the cut polyhydroxyalkanoate pieces are well achieved, so that pellets having the required physical properties can be prepared.

Meanwhile, the process for preparing pellets according to the present disclosure may further comprise dewatering and drying the pellets formed **in** step (4) (step (5)). Specifically, the pellets may be dewatered using a centrifugal dewaterer to primarily remove water contained in the pellets and then dried at 40 to 100°C for 1 to 24 hours to secondarily remove water contained in the pellets.

In the present disclosure as described above, the polyhydroxyalkanoate contained in the raw material is processed in a twin-screw extruder in a low-temperature and low-pressure environment, transported by a gear pump, and then exposed to a high-pressure environment only prior to pelletization. Thus, it is possible to minimize the decrease in the molecular weight of the polyhydroxyalkanoate during the pelletizing procedure.

Specifically, as pellets are prepared in the present disclosure using the preparation process described above, the molecular weight of the polyhydroxyalkanoate contained in the raw material in step (1) and the molecular weight of the polyhydroxyalkanoate contained in the pellets formed in step (4) may be at the same level. Specifically, when pellets are prepared according to the present disclosure, the rate of decrease in the molecular weight ($M_d$) of the polyhydroxyalkanoate according to the following Equation 1 may be 15% or less. More specifically, the rate of decrease in the molecular weight ($M_d$) of the polyhydroxyalkanoate may be 14% or less, 13% or less, 12% or less, 11% or less, or 10% or less (e.g., 0.05 to 15%, 0.1 to 10%, 0.1 to 5%, or 0.2 to 1%). As the rate of decrease in the molecular weight ($M_d$) of the polyhydroxyalkanoate is 15% or less, it is possible to provide articles (molded articles) with high mechanical properties such as elongation and impact strength.

$$[\text{Equation 1}]$$

$$M_d = \{(M_1 - M_2) / M_1\} \times 100$$

In Equation 1, $M_1$ is the weight average molecular weight of the polyhydroxyalkanoate contained in the raw material, and $M_2$ is the weight average molecular weight of the polyhydroxyalkanoate contained in the pellets.

**Pellets**

The present disclosure provides pellets prepared by the above preparation process. As pellets according to the present disclosure are prepared by the preparation process described above, the molecular weight of the polyhydroxyalkanoate contained in the pellets may be at the same level as (or a similar level to) the molecular weight of the polyhydroxyalkanoate initially used as the raw material.

As the pellets according to the present disclosure comprise a polyhydroxyalkanoate with a minimized decrease in molecular weight as described above, it may have excellent mechanical properties such as elongation and impact strength. Accordingly, when the pellets according to the present disclosure are used to manufacture various articles, articles having excellent mechanical properties and excellent biodegradability can be manufactured.

The articles are not particularly limited, but they may specifically be films, straws, containers, trays, or cups.

**Apparatus for preparing pellets**

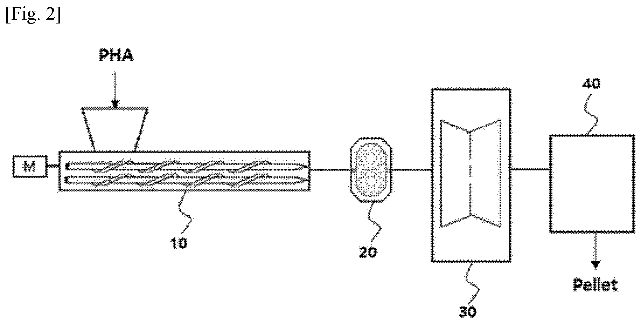

The present disclosure provides an apparatus for preparing the pellets described above. Specifically, the apparatus for preparing pellets according to the present disclosure comprises a twin-screw extruder to form a polyhydroxyalkanoate melt from a raw material comprising a polyhydroxyalkanoate (PHA) and an additive; a gear pump provided at the rear end of the twin-screw extruder to transport the polyhydroxyalkanoate melt; a die plate for forming a polyhydroxyalkanoate melt strand from the polyhydroxyalkanoate melt transported through the gear pump; and an underwater pellet cutter to cut and crystallize the polyhydroxyalkanoate melt strand formed through the die plate to form pellets. Hereinafter, this will be described by referring to Fig. 2.

Twin-screw extruder (10)

A twin-screw extruder (10) equipped in the apparatus for preparing pellets according to the present disclosure forms a polyhydroxyalkanoate melt from a raw material comprising a polyhydroxyalkanoate (PHA) and an additive. The twin-screw extruder (10) may not be particularly limited as long as it is a commonly known twin-screw extruder capable of mixing and melting a polymer resin. Specifically, the twin-screw extruder (10) may be an intermeshing co-rotating twin-screw extruder, an intermeshing counter-rotating twin-screw extruders, or a tangential counter-rotating twin-screw extruder.

The twin-screw extruder (10) may be operated under relatively low-temperature and low-pressure conditions (with the barrel temperature and screw rotation speed controlled) as described above. As a result, the stress applied to the polyhydroxyalkanoate contained in the raw material is minimized; thus, the decrease **in** the molecular weight of the polyhydroxyalkanoate can be controlled.

Gear pump (20)

A gear pump (20) equipped **in** the apparatus for preparing pellets according to the present disclosure is provided at the rear end of the twin-screw extruder (10) to transport the polyhydroxyalkanoate melt. Specifically, the gear pump (20) supplies the polyhydroxyalkanoate melt formed and discharged from the twin-screw extruder (10) to a die plate (30). As the gear pump (20) is provided at the rear end of the twin-screw extruder (10), the present disclosure can smoothly transport the polyhydroxyalkanoate melt even if it has a high viscosity.

The gear pump (20) is not particularly limited as long as it is a commonly known gear pump capable of transporting a polymer resin melt.

Die plate (30)

A die plate (30) equipped **in** the apparatus for preparing pellets according to the present disclosure forms a polyhydroxyalkanoate molten strand from the polyhydroxyalkanoate melt transported through the gear pump (20).

The die plate (30) is not particularly limited as long as it is a commonly known die plate having a structure capable of extruding a polymer resin melt into a molten strand having a predetermined diameter.

Underwater pellet cutter (40)

An underwater pellet cutter (40) equipped **in** the apparatus for preparing pellets according to the present disclosure cuts and crystallizes the polyhydroxyalkanoate melt strand formed through the die plate (30) to form pellets.

The underwater pellet cutter (40) may comprise a cutter for cutting the polyhydroxyalkanoate melt strand and a circulating water bath for cooling and crystallizing the polyhydroxyalkanoate pieces cut through the cutter.

The underwater pellet cutter (40) is not particularly limited as long as it is a commonly known underwater pellet cutter comprising the cutter and the circulating water bath.

**Mode for the Invention**

Hereinafter, the present disclosure will be described in detail with reference to Examples, However, the scope of the present disclosure is not limited to the following examples.

**[Example 1] Preparation of pellets**

100 parts by weight of a polyhydroxyalkanoate (CJ CheilJedang; 4-HB repeat unit ratio: 8-12% by weight) and 0.5 phr (per hundred resin, unit of additive amount added per 100 parts by weight of polymer) of an additive (magnesium stearate) were mixed and fed to the hopper of a twin-screw extruder (L/D 24, 30 mm). Subsequently, the twin-screw extruder was operated at a barrel temperature of 120 to 160°C and a screw rotation speed of 70 to 100 rpm to form a polyhydroxyalkanoate melt. Subsequently, the polyhydroxyalkanoate melt thus formed was supplied to a die plate through a gear pump, and the supplied polyhydroxyalkanoate melt was passed through holes in the die plate at a temperature of 120 to 190°C to form polyhydroxyalkanoate melt strands. Subsequently, the polyhydroxyalkanoate melt strands thus formed were supplied to an underwater pellet cutter, cut, and then passed through a circulating water bath at 40 to 80°C to allow crystallization. Thereafter, the pellets (polyhydroxyalkanoate pieces) thus obtained were dried at a temperature of 40°C or higher to produce pellets comprising a polyhydroxyalkanoate.

**[Comparative Example 1] Preparation of pellets**

Pellets comprising a polyhydroxyalkanoate were prepared through the same procedure as in Example 1, except that a polyhydroxyalkanoate melt was formed without adding an additive (magnesium stearate) and fed directly to a die plate without a gear pump.

**[Comparative Example 2] Preparation of pellets**

Pellets comprising a polyhydroxyalkanoate were prepared through the same procedure as in Example 1, except that a polyhydroxyalkanoate melt was fed directly to a die plate without a gear pump.

**[Comparative Example 3] Preparation of pellets**

Pellets comprising a polyhydroxyalkanoate were prepared through the same procedure as in Example 1, except that a polyhydroxyalkanoate melt was formed without adding an additive (magnesium stearate).

**[Test Example 1] Analysis of weight average molecular weights and determination of decrease rate in molecular weight**

In each of Example 1 and Comparative Examples 1 to 3, the weight average molecular weight of the polyhydroxyalkanoate (PHA before extrusion) fed to the twin-screw extruder and that of the polyhydroxyalkanoate (PHA after extrusion) contained in the pellets were analyzed using gel permeation chromatography (GPC). The results are shown in Table 1 below. In the above GPC analysis, a refractive index detector (RID) using chloroform as a mobile phase was used, and polystyrene (PS) was used as a standard material.

In addition, the rate of decrease in molecular weight ($M_d$) was calculated according to the following Equation 1.

[Equation 1]

$$M_d = \{(M_1 - M_2) / M_1\} \times 100$$

In Equation 1, $M_1$ is the weight average molecular weight of the polyhydroxyalkanoate (PHA before extrusion) contained in the raw material, and $M_2$ is the weight average molecular weight of the polyhydroxyalkanoate (PHA after extrusion) contained in the pellets.

[Table 1]

| | Gear pump adopted or not | Content of additive (phr) | Weight average molecular weight of PHA before extrusion (g/mole) | Weight average molecular weight of PHA after extrusion (g/mole) | Rate of decrease in molecular weight (%) |
|---|---|---|---|---|---|
| Ex. 1 | Adopted | 0.5 | 683,000 | 681,000 | 0.29 |
| C. Ex. 1 | Not adopted | 0 | 861,000 | 382,000 | 55.63 |
| C. Ex. 2 | Not adopted | 0.5 | 874,000 | 543,000 | 37.87 |
| C. Ex. 3 | Adopted | 0 | 347,000 | 293,000 | 15.56 |

Referring to Table 1 above, in Example 1 according to the present disclosure, it was confirmed that there was almost no change in the molecular weight of the PHA with a rate of decrease in molecular weight of 0.29% by virtue of the use of an additive and a gear pump. It is understood from the above that when a gear pump is adopted, a PHA is processed in a low-temperature and low-pressure environment when it passes through the screw section of a twin-screw extruder, and the processed PHA is transported through the gear pump so that the PHA is exposed to a high-pressure environment only immediately prior to pelletization; thus, it is possible to control the decrease in the molecular weight of the PHA during the pelletization procedure. In addition, the use of an additive can also control the decrease in the molecular weight of the PHA.

Meanwhile, in Comparative Example 1, in which neither additive nor gear pump were adopted, the molecular weight was significantly decreased with a rate of decrease in molecular weight of 55.63%. In Comparative Examples 2 and 3, in which additive was used, or gear pump was adopted, it is confirmed that the molecular weight was significantly changed with a rate of decrease in molecular weight of both PHAs exceeding 15%.

[Explanation of Reference Numerals]

10: twin-screw extruder
20: gear pump
30: die plate
40: underwater pellet cutter

**Claims**

1. A process for preparing pellets, which comprises:

   (1) feeding a raw material comprising a polyhydroxyalkanoate (PHA) and an additive to a twin-screw extruder to form a polyhydroxyalkanoate melt;
   (2) supplying the polyhydroxyalkanoate melt to a die plate through a gear pump;
   (3) passing the polyhydroxyalkanoate melt through the die plate to form a polyhydroxyalkanoate melt strand; and
   (4) cutting and crystallizing the polyhydroxyalkanoate melt strand in an underwater pellet cutter to form pellets.

2. The process for preparing pellets of claim 1, wherein, in step (1), the barrel temperature of the twin-screw extruder is 120 to 160°C.

3. The process for preparing pellets of claim 1, wherein, in step (1), the temperature of the polyhydroxyalkanoate melt is 130 to 160°C.

4. The process for preparing pellets of claim 1, wherein, in step (1), the additive comprises at least one of a slip agent and a nucleating agent.

5. The process for preparing pellets of claim 4, wherein the amount of the additive is 0.1 to 20 parts by weight relative to 100 parts by weight of the polyhydroxyalkanoate.

6. The process for preparing pellets of claim 1, wherein, in step (1), the polyhydroxyalkanoate is a crystalline polyhydroxyalkanoate, a semi-crystalline polyhydroxyalkanoate, or an amorphous polyhydroxyalkanoate.

7. The process for preparing pellets of claim 1, wherein, in step (1), the polyhydroxyalkanoate is a copolymer comprising a repeat unit derived from at least one selected from the group consisting of 3-hydroxybutyrate (3-HB), 3-hydroxypropionate (3-HP), 3-hydroxyvalerate (3-HV), 3-hydroxyhexanoate (3-HH), 4-hydroxybutyrate (4-HB), 4-hydroxyvalerate (4-HV), 4-hydroxyhexanoate (4-HH), 5-hydroxyvalerate (5-HV), and 6-hydroxyhexanoate (6-HH).

8. The process for preparing pellets of claim 7, wherein the polyhydroxyalkanoate is a copolymer comprising a repeat unit derived from 4-hydroxybutyrate (4-HB) in an amount of 1 to 60% by weight based on the total weight of the copolymer.

9. The process for preparing pellets of claim 7, wherein the polyhydroxyalkanoate is a poly(3-hydroxybutyrate-co-4-hydroxybutyrate).

10. The process for preparing pellets of claim 1, wherein, in step (2), the pressure difference of the gear pump before and after the passage of the polyhydroxyalkanoate melt is 60 to 180 bar.

11. The process for preparing pellets of claim 1, wherein, in step (3), the temperature of the die plate is 120 to 190°C.

12. The process for preparing pellets of claim 1, wherein, in step (4), the temperature of the circulating water bath equipped in the underwater pellet cutter is 40 to 80°C.

13. The process for preparing pellets of claim 1, which further comprises (5) dewatering and drying the pellets formed in step (4).

14. The process for preparing pellets of claim 1, wherein the rate of decrease in the molecular weight ($M_d$) of the polyhydroxyalkanoate according to the following Equation 1 is 15% or less:

[Equation 1]

$$M_d = \{(M_1 - M_2) / M_1\} \times 100$$

in Equation 1, $M_1$ is the weight average molecular weight of the polyhydroxyalkanoate contained in the raw material, and $M_2$ is the weight average molecular weight of the polyhydroxyalkanoate contained in the pellets.

15. A pellet, which is prepared by the preparation process according to any one of claims 1 to 14.

16. An apparatus for preparing pellets, which comprises:

a twin-screw extruder to form a polyhydroxyalkanoate melt from a raw material comprising a polyhydroxyalkanoate (PHA) and an additive;
a gear pump provided at the rear end of the twin-screw extruder to transport the polyhydroxyalkanoate melt;
a die plate for forming a polyhydroxyalkanoate melt strand from the polyhydroxyalkanoate melt transported through the gear pump; and
an underwater pellet cutter to cut and crystallize the polyhydroxyalkanoate melt strand formed through the die plate to form pellets.

[Fig. 1]

```
                    ┌──────────────┐
                    │    Start     │
                    └──────┬───────┘
                           │
                           ▼
    ┌──────────────────────────────────────────────┐
    │  Formation of a polyhydroxyalkanoate melt      │─── S (1)
    └──────────────────────┬─────────────────────────┘
                           │
                           ▼
    ┌──────────────────────────────────────────────┐
    │        Supply through a gear pump              │─── S (2)
    └──────────────────────┬─────────────────────────┘
                           │
                           ▼
    ┌──────────────────────────────────────────────┐
    │ Formation of a polyhydroxyalkanoate melt strand│─── S (3)
    └──────────────────────┬─────────────────────────┘
                           │
                           ▼
    ┌──────────────────────────────────────────────┐
    │            Formation of pellets                │─── S (4)
    └──────────────────────┬─────────────────────────┘
                           │
                           ▼
    ┌──────────────────────────────────────────────┐
    │      Dewatering and drying the pellets         │─── S (5)
    └──────────────────────┬─────────────────────────┘
                           │
                           ▼
                    ┌──────────────┐
                    │     End      │
                    └──────────────┘
```

[Fig. 2]

## INTERNATIONAL SEARCH REPORT

| | International application No. |
|---|---|
| | **PCT/KR2023/018737** |

### A. CLASSIFICATION OF SUBJECT MATTER

**B29B 9/12**(2006.01)i; **B29B 11/10**(2006.01)i; **C08L 67/02**(2006.01)i

According to International Patent Classification (IPC) or to both national classification and IPC

### B. FIELDS SEARCHED

Minimum documentation searched (classification system followed by classification symbols)

B29B 9/12(2006.01); B29C 48/08(2019.01); C08G 63/78(2006.01); C08J 9/228(2006.01); C08L 25/04(2006.01); C08L 67/04(2006.01); D01F 6/62(2006.01); D01F 6/84(2006.01); D01F 6/92(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리하이드록시알카노에이트 (polyhydroxyalkanoate), 펠렛 (pellet), 용융 (melting)

### C. DOCUMENTS CONSIDERED TO BE RELEVANT

| Category* | Citation of document, with indication, where appropriate, of the relevant passages | Relevant to claim No. |
|---|---|---|
| X | US 2012-0041086 A1 (SAMPATH, B. D. S. et al.) 16 February 2012 (2012-02-16)<br>See paragraphs [0026]-[0028], [0065] and [0089]-[0242]. | 1,4-8,10-16 |
| Y | | 2-3,9 |
| Y | JP 6854487 B2 (TOKYO INSTITUTE OF TECHNOLOGY et al.) 07 April 2021 (2021-04-07)<br>See paragraphs [0039] and [0079]. | 2-3,9 |
| A | JP 6592862 B2 (TOKYO INSTITUTE OF TECHNOLOGY et al.) 23 October 2019 (2019-10-23)<br>See entire document. | 1-16 |
| A | KR 10-2012-0107917 A (METABOLIX, INC.) 04 October 2012 (2012-10-04)<br>See entire document. | 1-16 |
| A | KR 10-2431676 B1 (CJ CHEILJEDANG CORPORATION) 11 August 2022 (2022-08-11)<br>See entire document. | 1-16 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 March 2024** | **04 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/018737**

| Patent document cited in search report | | | Publication date (day/month/year) | Patent family member(s) | | | Publication date (day/month/year) |
|---|---|---|---|---|---|---|---|
| US | 2012-0041086 | A1 | 16 February 2012 | US | 9249270 | B2 | 02 February 2016 |
| JP | 6854487 | B2 | 07 April 2021 | EP | 3404130 | A1 | 21 November 2018 |
| | | | | EP | 3404130 | B1 | 26 August 2020 |
| | | | | US | 10760183 | B2 | 01 September 2020 |
| | | | | US | 2019-0003082 | A1 | 03 January 2019 |
| | | | | WO | 2017-122679 | A1 | 20 July 2017 |
| JP | 6592862 | B2 | 23 October 2019 | EP | 3042987 | A1 | 13 July 2016 |
| | | | | EP | 3042987 | B1 | 20 April 2022 |
| | | | | US | 2016-0230313 | A1 | 11 August 2016 |
| | | | | US | 9732443 | B2 | 15 August 2017 |
| | | | | WO | 2015-029316 | A1 | 05 March 2015 |
| KR | 10-2012-0107917 | A | 04 October 2012 | CN | 102459462 | A | 16 May 2012 |
| | | | | CN | 102459462 | B | 24 July 2013 |
| | | | | CN | 102482482 | A | 30 May 2012 |
| | | | | EP | 2445965 | A2 | 02 May 2012 |
| | | | | EP | 2445965 | B1 | 08 August 2018 |
| | | | | EP | 2445966 | A2 | 02 May 2012 |
| | | | | EP | 3360927 | A1 | 15 August 2018 |
| | | | | EP | 3360927 | B1 | 09 September 2020 |
| | | | | KR | 10-2012-0107918 | A | 04 October 2012 |
| | | | | US | 2012-0107630 | A1 | 03 May 2012 |
| | | | | US | 2012-0108743 | A1 | 03 May 2012 |
| | | | | US | 2013-0317163 | A1 | 28 November 2013 |
| | | | | US | 2014-0194568 | A1 | 10 July 2014 |
| | | | | US | 2016-0053111 | A1 | 25 February 2016 |
| | | | | US | 8524856 | B2 | 03 September 2013 |
| | | | | US | 8629212 | B2 | 14 January 2014 |
| | | | | US | 9056947 | B2 | 16 June 2015 |
| | | | | US | 9650513 | B2 | 16 May 2017 |
| | | | | WO | 2010-151798 | A2 | 29 December 2010 |
| | | | | WO | 2010-151798 | A3 | 31 March 2011 |
| | | | | WO | 2010-151811 | A2 | 29 December 2010 |
| | | | | WO | 2010-151811 | A3 | 31 March 2011 |
| KR | 10-2431676 | B1 | 11 August 2022 | WO | 2023-008903 | A1 | 02 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101485386